# EUROPÄISCHE PATENTSCHRIFT

(11) **EP 1 449 348 B1**
(45) Veröffentlichungstag und Bekanntmachung des Hinweises auf die Patenterteilung: **03.01.2007**
(21) Anmeldenummer: 02792842.3
(22) Anmeldetag: 29.11.2002
(51) Int. Cl.: H04L 29/12, H04Q 7/22

(54) **FUNKKOMMUNIKATIONSSYSTEM UND VERFAHREN ZU DESSEN BETRIEB**
RADIO COMMUNICATION SYSTEM AND METHOD FOR THE OPERATION THEREOF
SYSTEME DE COMMUNICATION RADIO ET PROCEDE POUR LE FAIRE FONCTIONNER

(30) Priorität: 29.11.2001 EP 01128548; 29.11.2001 DE 10158616
(43) Veröffentlichungstag der Anmeldung: 25.08.2004
(73) Patentinhaber: SIEMENS AKTIENGESELLSCHAFT, 80333 München (DE)
(72) Erfinder: METZLER, Jochen, 55118 Mainz (DE); REIM, Thomas, 88481 Balzheim (DE)
(86) Internationale Anmeldenummer: PCT/EP2002/013525
(87) Internationale Veröffentlichungsnummer: WO 2003/047213

(56) Entgegenhaltungen:
- EP-A- 0 841 831
- WO-A-01/91399
- VEERRAGHAVAN ET AL: "Interworking of addressing schemes in an internetwork" GLOBECOM '00 - IEEE. GLOBAL TELECOMMUNICATION CONFERENCE, PROCEEDINGS OF GLOBAL TELECOMMUNICATIONS CONFERENCE, SAN FRANSCISCO, CA, USA, Bd. 1, 27. November 2000 (2000-11-27) - 1. Dezember 2000 (2000-12-01), Seiten 587-592, XP002199274 New- York (US)

## Beschreibung

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Funkkommunikationssysteme können aufgeteilt werden in ein Stammnetzwerk (core net) und in ein Funkzugangsnetz, auch RAN (Radio Access Network) bezeichnet. In dem Stammnetzwerk werden Nutz- und Signalisierungsdaten einer Vielzahl von Endgeräten über weite Strecken leitungsgebunden befördert. Über das Stammnetzwerk kann darüber hinaus eine Verbindung zu einem Festkommunikationsnetz realisiert werden. In dem Funkzugangsnetz werden von den Endgeräten empfangene Daten in ein für die Übertragung im Stammnetzwerk geeignetes Format umgesetzt. Ferner wird das Format von vom Stammnetzwerk empfangenen Daten an die Funkübertragung angepasst und an die jeweilige Funkstation weitergeleitet, innerhalb von deren Sendebereich sich das betreffende Endgerät aufhält.

Funkkommunikationssysteme der ersten und zweiten Generation sind derzeit weltweit im Einsatz und stoßen wegen der großen Nachfrage nach mobiler Kommunikation an ihre Kapazitätsgrenzen. Die sich abzeichnenden Kapazitätsprobleme sollen durch die Funkkommunikationssysteme der dritten Generation gelöst werden. Eines der erfolgversprechendsten Funkkommunikationssysteme der dritten Generation ist das Universal Mobile Telecommunication System (UMTS), das von dem Standardisierungsgremium 3GPP (Third Generation Partnership Project) spezifiziert wurde (siehe zum Beispiel B. Walke, Mobilfunknetze und ihre Protokolle, Band 1, Seite 385 bis 387, Teubner-Verlag 2000).

Die Datenübertragung in dem für UMTS spezifizierten Zugangsnetz mit der Bezeichnung UTRAN erfolgt mittels verbindungsorientierter Kommunikation nach dem sogenannten ATM-Verfahren. Dabei werden die Daten, die über eine Verbindung übertragen werden sollen, in ATM-Zellen aufgeteilt. Die ATM-Zellen für mehrere Verbindungen werden zeitlich ineinander verschachtelt und über dieselbe physikalische Verbindung übertragen. Der Verbindungskanal bleibt dabei für die Dauer der Datenübertragung derselbe. Eine Übersicht über das ATM-Verfahren ist zum Beispiel B. Walke, Mobilfunknetze und ihre Protokolle, Band 2, Kapitel 9, Seite 291 bis 326, Teubner-Verlag 2000, zu entnehmen.

Parallel zu den Erfordernissen an die Mobilkommunikation steigt die Nachfrage nach weltweiter Datenkommunikation mit hoher Bandbreite. Diese Datenkommunikation erfolgt über das Internet mittels IP (Internet Protokoll)-Kommunikation. Dabei werden Datenpakete über paketorientierte Verbindungen, das heisst, mittels verbindungsloser Kommunikation, zwischen den Teilnehmern übermittelt. Bei der paketorientierten Vermittlung wird der Verbindungskanal zwischen den Teilnehmern nur für die Übermittlung des jeweiligen Datenpakets frei gewählt. Ein nachfolgendes Datenpaket kann über einen anderen Kanal geleitet werden. Daher ist es möglich, dass die Empfangsreihenfolge der Datenpakete sich von der Sendereihenfolge unterscheidet. Da bei der paketorientierten Vermittlung nur Ausgangspunkt und Ziel bestimmt sind und der Verbindungskanal von Datenpaket zu Datenpaket variabel ist, wird in diesem Zusammenhang auch von einer virtuellen Verbindung gesprochen.

Zunehmend wird gefordert, große Datenmengen auch durch mobile Kommunikation mit hoher Bandbreite übertragen zu können. Es wurde daher ein IP-basiertes Funkkommunikationsnetz vorgeschlagen, in dem die Verbindungen mittels IP-Kommunikation erfolgen.

Ein Funkkommunikationssystem, das einerseits mit Funkkommunikationssystemen, die verbindungsorientierte Kommunikation unterstützen, kompatibel ist, und das andererseits die mobile Datenkommunikation mittels verbindungsloser Kommunikation unterstützt, wurde in der älteren europäischen Patentanmeldung 01115520.7 vorgeschlagen. Zum Aufbau einer Verbindung zwischen einem ersten Netzwerkelement, das verbindungsorientierte Kommunikation unterstützt, und einem zweiten Netzwerkelement, das verbindungslose Kommunikation unterstützt, wird eine Verbindung zwischen dem ersten Netzwerkelement und einer Netzübergangseinheit aufgebaut und eine verbindungslose Kommunikation zwischen dem zweiten Netzwerkelement und der Netzübergangseinheiteingerichtet. Dabei wird ein erstes Signalisierungsprotokoll, das dem ersten Netzwerkelement zugeordnet ist, und ein zweites Signalisierungsprotokoll, das dem zweiten Netzwerkelement zugeordnet ist, verwendet. Das erste Signalisierungsprotokoll und das zweite Signalisierungsprotokoll unterscheiden sich dabei durch ein Informationselement, das eine Adresse für die verbindungslose Kommunikation zwischen dem zweiten Netzwerkelement und der Netzübergangseinheit enthält. Zur Adressauflösung ist es in dem vorgeschlagenen Funkkommunikationssystem erforderlich, dass in jedem Netzwerkelement eine Umsetzungstabelle eingerichtet wird.

In der EP 0841831 A2 wird ein Sprach-/Daten-Verbindungsknoten (voice/data gateway) beschrieben, mittels dessen eine Kommunikation zwischen Stationen unterschiedlicher Netze ermöglicht wird, wobei die Netze unterschiedliche Übertragungsstandards verwenden. Ein Adressübersetzer dient zum Übersetzen der Adressen der Stationen von einem Adressformat ihres Netzes in ein Adressformat eines anderen Netzes.

Der Erfindung liegt das Problem zugrunde, ein weiteres Funkkommunikationssystem und ein Verfahren zu dessen Betrieb anzugeben, das einerseits mit Funkkommunikationssystemen, die verbindungsorientierte Kommunikation unterstützen, kompatibel ist, und das andererseits die mobile Datenkommunikation mittels verbindungsloser Kommunikation unterstützt, und das mit geringerem Aufwand implementierbar ist.

Dieses Problem wird erfindungsgemäß gelöst durch ein Funkkommunikationssystem gemäß Anspruch 1, sowie ein Verfahren zu dessen Betrieb gemäß Anspruch 10. Weitere Ausgestaltungen der Erfindung gehen aus den Unteransprüchen hervor.

Das Funkkommunikationssystem umfasst ein erstes Netzwerkelement, das verbindungsorientierte Kommunikation unterstützt und dem eine erste Adresse in einem ersten Format zugewiesen ist, und ein zweites Netzwerkelement, das verbindungslose Kommunikation unterstützt und dem eine zweite Adresse in einem zweiten Format zugewiesen ist. Ferner umfasst das Funkkommunikationssystem eine Netzübergangseinheit und eine Datenbank. Zum Aufbau einer Verbindung zwischen dem ersten Netzwerkelement und dem zweiten Netzwerkelement wird eine Verbindung zwischen dem ersten Netzwerkelement und der Netzübergangseinheit aufgebaut, und es wird eine verbindungslose Kommunikation zwischen der Netzübergangseinheit und dem zweiten Netzwerkelement aufgebaut. Dabei erfolgt eine Umsetzung von Adressen vom ersten Format in das zweite Format mit Hilfe der Datenbank.

Erfindungsgemäß sind in der Datenbank zentral Adresstabellen abgelegt, mit deren Hilfe Adressen im ersten Format auf Adressen im zweiten Format und umgekehrt abgebildet werden können. Durch die zentrale Speicherung der Adresstabellen können die verschiedenen Netzwerkelemente auf die Datenbank zugreifen, und es ist nicht erforderlich, in jedem Netzwerkelement die Adresstabellen abzuspeichern. Dadurch vereinfacht sich die Implementierung deutlich. Ferner wird die Datenpflege erleichtert.

Vorzugsweise ist mindestens ein Server vorgesehen, in dem die Datenbank gespeichert ist.

Im Hinblick auf Redundanz und auf einen Austausch von Informationen zwischen verschiedenen Domänen ist es vorteilhaft, die Datenbank im Sinne einer verteilten Datenbank an mehreren Speicherorten zu speichern.

Es liegt im Rahmen der Erfindung, zum Aufbau der Verbindung zwischen dem ersten Netzwerkelement und dem zweiten Netzwerkelement von dem ersten Netzwerkelement an das zweite Netzwerkelement eine Funkverbindungsanfrage über einen Signalisierungskanal zu schicken. Das zweite Netzwerkelement ermittelt auf die Funkverbindungsanfrage hin über eine Anfrage an die Datenbank seine Adresse im ersten Format. Das zweite Netzwerkelement sendet seine Adresse im ersten Format als Antwort an das erste Netzwerkelement, um diesem den Aufbau einer Verbindung zur Übertragung von Nutzdaten zu ermöglichen. Die Verbindung zwischen dem ersten Netzwerkelement und der Netzübergangseinheit wird aufgebaut, wobei der Netzübergangseinheit die Adresse des zweiten Netzwerkelementes im ersten Format mitgeteilt wird. Die Netzübergangseinheit ermittelt über eine Anfrage an die Datenbank die Adresse des zweiten Netzwerkelementes im zweiten Format, die der Netzübergangseinheit die Möglichkeit gibt, das Ziel des Verbindungsaufbaus zu bestimmen. Mit Hilfe der Adresse des zweiten Netzwerkelementes im zweiten Format wird die verbindungslose Kommunikation zwischen der Netzübergangseinheit und dem zweiten Netzwerkelement eingerichtet.

Es liegt im Rahmen der Erfindung, zum Einrichten der Kommunikation zwischen dem ersten Netzwerkelement und dem zweiten Netzwerkelement von dem zweiten Netzwerkelement an das erste Netzwerkelement eine Funkverbindungsanfrage über einen Signalisierungskanal zu schicken. Das erste Netzwerkelement sendet seine Adresse im ersten Format als Antwort an das zweite Netzwerkelement. Das zweite Netzwerkelement ermittelt über eine Anfrage an die Datenbank die Adresse der Netzübergangseinheit im zweiten Format, die eine Verbindung mit dem ersten Netzwerkelement aufbauen kann. Unter Verwendung dieser Adresse im zweiten Format wird die verbindungslose Kommunikation zwischen dem zweiten Netzwerkelement und der Netzübergangseinheit eingerichtet. Die Verbindung zwischen der Netzübergangseinheit und dem ersten Netzwerkelement wird unter Verwendung der Adresse des ersten Netzwerkelementes im ersten Format aufgebaut.

Die Erfindung ist vorteilhaft einsetzbar in einem Funkkommunikationssystem, bei dem das erste Netzwerkelement ATM-Verbindungen unterstützt und das zweite Netzwerkelement IP-Kommunikation unterstützt.

In diesem Fall liegt es im Rahmen der Erfindung, dass dem ersten Netzwerkelement eine A2EA (AAL-2 Endsystem Address)-Adresse, die z. B. E.164-basiert ist, und dem zweiten Netzwerkelement eine IP-Adresse zugewiesen wird. Die Datenbank umfasst in diesem Fall Umsetzungstabellen von A2EA-Adressen in IP-Adressen und umgekehrt.

Es liegt im Rahmen der Erfindung, die Datenbank in einem im Funkkommunikationssystem ohnehin vorhandenen Server abzuspeichern. Dazu eignet sich insbesondere ein in IP-Netzen durch RFC1034 und RFC1035 spezifizierter Domain Name Service (DNS), der für TCP/IP-Applikationen unter Anderem dafür verwendet wird, Hostnamen auf IP-Adressen und IP-Adressen auf Hostnamen abzubilden.

Es liegt im Rahmen der Erfindung, dass mehrere Netzübergangseinheiten, mehrere erste Netzwerkelemente, die verbindungsorientierte Kommunikation unterstützen, und mehrere zweite Netzwerkelemente, die verbindungslose Kommunikation unterstützen, vorgesehen sind. In diesem Fall wird in der Datenbank zusätzlich gespeichert, welche Netzübergangseinheit für welches erste Netzwerkelement zuständig ist. Dieses erfolgt zum Beispiel dadurch, dass die A2EA-Adresse des ersten Netzwerkelementes in einen Hostnamen integriert wird. Diesem Hostnamen werden die IP-Adressen der zuständigen Netzübergangseinheiten zugeordnet.

Es liegt im Rahmen der Erfindung, die Adressierung im IP-basierten Teil des Funkkommunikationssystems so festzulegen, dass sie die zugehörige A2EA-Adresse enthält. Die A2EA-Adresse kann dazu als Bestandteil eines Domain-Name oder einer Knotenbezeichnung gewählt werden. Dabei kann dem zweiten Netzwerkelement zusätzlich ein Knoten- oder Domain-Name zugewiesen werden, der die zugehörige A2EA-Adresse enthält.

Im Folgenden wird die Erfindung anhand von Beispielen, die in den Figuren dargestellt sind, näher erläutert.
Figur 1 zeigt ein erfindungsgemäßes Funkkommunikationssystem.
Figur 2 zeigt Verbindungsaufbau, Datenübertragung und Verbindungsabbau zwischen einer IP-basierten und einer ATM-basierten Funknetzsteuerung, wobei die ATM-basierte Funknetzsteuerung die Verbindung initiiert hat.
Figur 3 zeigt Verbindungsaufbau, Datenübertragung und Verbindungsabbau zwischen einer IP-basierten und einer ATM-basierten Funknetzsteuerung, wobei die IP-basierte Funknetzsteuerung die Verbindung initiiert hat.
Figur 4 zeigt beim Verbindungsaufbau zwischen der IP-basierten und der ATM-basierten Funknetzsteuerung verwendete Protokolle.

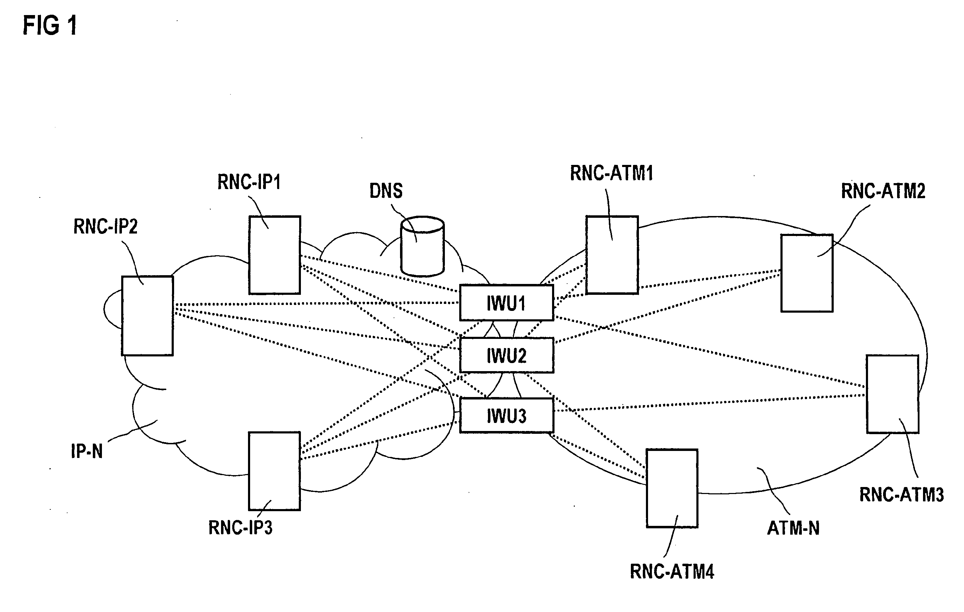

Ein Funkkommunikationssystem umfasst ein ATM-Netzwerkteil ATM-N und ein IP-Netzwerkteil IP-N (siehe Figur 1). In dem ATM-Netzwerkteil ATM-N sind vier Funknetzsteuerungen RNC-ATM1, RNC-ATM2, RNC-ATM3, RNC-ATM4 vorgesehen, die ATM-basierte, das heisst verbindungsorientierte, Kommunikation unterstützen. Jeder der ATM-basierten Funknetzsteuerungen RNC-ATMi ist eine E.164-Adresse zugeordnet.

In dem IP-Netzwerkteil IP-N sind drei IP-basierte Funknetzsteuerungen RNC-IP1, RNC-IP2, RNC-IP3 vorgesehen, die verbindungslose Kommunikation unterstützen. Jeder der IP-basierten Funknetzsteuerungen RNC-IPi ist eine IP-Adresse zugeordnet.

Um Verbindungen zwischen den ATM-basierten Funknetzsteuerungen RNC-ATMi und den IP-basierten Funksteuerungen RNC-IPi zu ermöglichen, sind zwischen dem ATM-Netzwerkteil ATM-N und dem IP-Netzwerkteil IP-N Netzübergangseinheiten IWU1, IWU2, IWU3 vorgesehen. Den Netzübergangseinheiten IWU1, IWU2, IWU3 ist dabei sowohl eine IP-Adresse, als auch eine E.164-Adresse zugeordnet.

Im Bereich des IP-Netzwerkteils IP-N ist ein Server DNS vorgesehen, in dem Adresstabellen gespeichert und verwaltet werden. Die Adresstabellen enthalten jeweils die IP-Adresse und die zugeordnete E.164-Rufnummer der IP-basierten Funknetzsteuerungen RNC-IPi. Darüber hinaus sind in dem Server DNS die E.164-Adressen der ATM-basierten Funknetzsteuerungen RNC-ATMi gespeichert, die in einen Hostnamen integriert sind. Dem Hostnamen ist in der Adresstabelle die IP-Adresse der Netzübergangseinheit beziehungsweise Netzübergangseinheiten IWUi zugeordnet, die für die jeweilige ATM-basierte Funknetzsteuerung RNC-ATMi zuständig ist.

In dem Server können zusätzlich IP-netzinterne Namen für die IP-Knoten verwaltet werden. Dazu ist insbesondere die sogenannte CNAME-Option geeignet, die von IETF spezifiziert wurde.

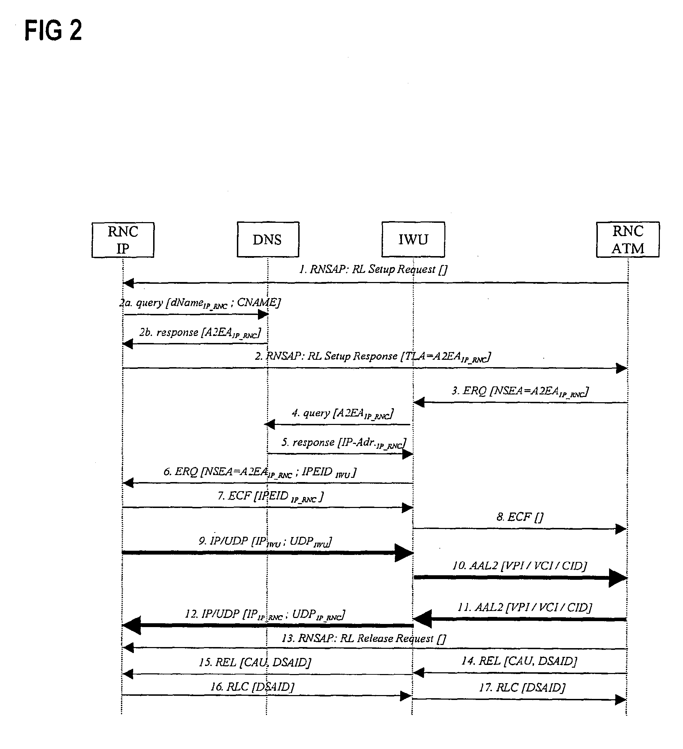

Zum Verbindungsaufbau zwischen einer ATM-basierten Funknetzsteuerung RNC-ATM und einer IP-basierten Funknetzsteuerung RNC-IP unter Mitwirkung einer Netzübergangseinheit IWU und einem Server DNS sendet die ATM-basierte Funknetzsteuerung RNC-ATM eine Funkverbindungsanfrage über einen Signalisierungskanal an die IP-basierte Funknetzsteuerung (siehe Figur 2). Über eine Abfrage Query [dNAME_{IP_RNC};CNAME] an den Datenbankserver DNS erhält die IP-basierte Funknetzsteuerung RNC-IP als Antwort response [A2EA_{IP_RNC}] ihre eigene E.164-Adresse.

Die IP-basierte Funknetzsteuerung bestätigt die Funkverbindungsanfrage und sendet dabei seine E.164-Adresse an die ATM-basierte Funknetzsteuerung RNC-ATM.

Die ATM-basierte Funknetzsteuerung RNC-ATM baut eine ATM-basierte AAL-2-Verbindung entsprechend dem unter der Bezeichnung ALCAP von ITUT unter der Bezeichnung Q.2630.x standardisierten Protokoll bis zur Netzübergangseinheit IWU auf. Dabei wird die E.164-Adresse der IP-basierten Funknetzsteuerung RNC-IP mitübermittelt. Die Anfrage verwendet eine bereits eingerichtete Signalisierungsverbindung zwischen der ATM-basierten Funknetzsteuerung RNC-ATM und der Netzübergangseinheit IWU.

Die Netzübergangseinheit IWU stellt eine Namensabfrage an den Datenbankserver DNS, um zu der übermittelten E.164-Adresse A2EA_{IP_RNC} der IP-basierten Funknetzsteuerung RNC-IP, die IP-Adresse der IP-basierten Funknetzsteuerung RNC-IP zu erhalten. Der Datenbankserver DNS antwortet mit einer oder mehreren IP-Adressen der IP-basierten Funknetzsteuerung RNC-IP.

Anschließend wird eine IP-basierte Kommunikation zwischen der Netzübergangseinheit IWU und der IP-basierten Funknetzsteuerung RNC-IP eingerichtet. Dazu wird eine Signalisierungsnachricht Establishment Request ERQ[NSEA=A2EA_{IP_RNC};IPEID_{IWU}] gesendet. Die IP-basierte Funknetzsteuerung RNC-IP antwortet mit einem Establishment Confirm ECF an die Netzübergangseinheit IWU. Die Netzübergangseinheit IWU sendet eine weitere Signalisierungsnachricht Establishment Confirm an die ATM-basierte Funknetzsteuerung RNC-ATM. Damit ist eine Nutzdatenverbindung zwischen der IP-basierten Funknetzsteuerung RNC-IP und der ATM-basierten Funknetzsteuerung RNC-ATM eingerichtet. Es werden Nutzdaten übertragen, die als schwarze Pfeile dargestellt sind. Die Nutzdaten zwischen der IP-basierten Funknetzsteuerung RNC-IP und der Netzübergangseinheit IWU werden über eine IP/UDP-Verbindung übertragen. Zwischen der Netzübergangseinheit IWU und der ATM-basierten Funknetzsteuerung RNC-ATM werden die Nutzdaten über eine ATM-basierte AAL2-Verbindung übertragen.

Nach Ende der Datenübertragung wird die Kommunikation wieder beendet. Dazu wird zwischen der ATM-basierten Funknetzsteuerung RNC-ATM und der IP-basierten Funknetzsteuerung RNC-IP ein RL Release Request für die Netzübergangseinheit IWU transparent ausgetauscht. Es folgt der Abbau der Verbindung zwischen der ATM-basierten Funknetzsteuerung RNC-ATM und der Netzübergangseinheit IWU, sowie die Beendigung der verbindungslosen Kommunikation zwischen der Netzübergangseinheit IWU und der IP-basierten Funknetzsteuerung RNC-IP.

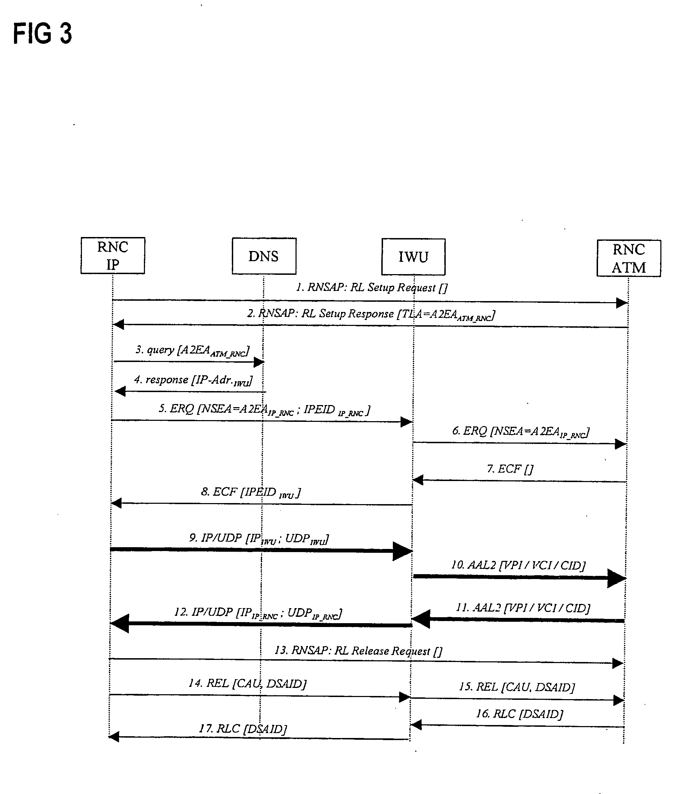

Zur Einrichtung einer Kommunikation zwischen der IP-basierten Funknetzsteuerung RNC-IP und der ATM-basierten Funknetzsteuerung RNC-ATM sendet die IP-basierte Funknetzsteuerung RNC-IP eine Funkverbindungsanfrage über einen Signalisierungskanal an die ATM-basierte Funknetzsteuerung RNC-ATM (siehe Figur 3). Die ATM-basierte Funknetzsteuerung RNC-ATM bestätigt die Funkverbindungsanfrage und sendet dabei ihre E.164-Adresse A2EA_{ATM_RNC} mit. Diese Adresse ist fest in der ATM-basierten Funknetzsteuerung RNC-ATM konfiguriert.

Die IP-basierte Funknetzsteuerung RNC-IP stellt eine Anfrage an den Datenbankserver DNS, um die zugehörige IP-Adresse der zuständigen Netzübergangseinheit IWU zu erfahren. Wenn sich die IP-basierte Funknetzsteuerung RNC-IP und die ATM-basierte Funknetzsteuerung RNC-ATM in der gleichen Domäne befinden, kann sich die IP-Adresse aus der E.164-Adresse der ATM-basierten Funknetzsteuerung RNC-ATM und dem Domain Name der IP-basierten Funknetzsteuerung RNC-IP zusammensetzen. Alternativ kann die Bildung nach RFC2916 erfolgen, wobei Subdomänen gebildet werden können.

Der Datenbankserver DNS antwortet mit den IP-Adressen aller Netzübergangseinheiten IWU, die eine Verbindung mit der ATM-basierten Funknetzsteuerung RNC-ATM aufbauen können. Die IP-basierte Funknetzsteuerung RNC-IP hat an dieser Stelle die Möglichkeit, eine Lastverteilung (Load Sharing) vorzunehmen.

Die IP-basierte Funknetzsteuerung RNC-IP richtet eine verbindungslose Kommunikation zur Netzübergangseinheit IWU auf, wobei ein Protokoll verwendet wird, das dem unter dem Namen ALCAP standardisierten Protokoll zum Aufbau von ATM-basierten Verbindungen entspricht und das zusätzlich eine IP-Endpunktkennung für die Einrichtung der IP-Kommunikation zwischen der IP-basierten Funknetzsteuerung RNC-IP und der Netzübergangseinheit IWU enthält. Dabei wird die E.164-Adresse der ATM-basierten Funknetzsteuerung RNC-ATM mit übermittelt. Die Anfrage verwendet eine bereits aufgebaute Signalisierungsverbindung zwischen der IP-basierten Funknetzsteuerung RNC-IP und der Netzübergangseinheit IWU.

Anschließend wird von der Netzübergangseinheit IWU zur ATM-basierten Funknetzsteuerung eine Signalisierungsnachricht Establishment Request ERQ[NSEA=A2EA_{ATM_RNC}] gesendet, die mit einem Establishment Confirm ECF beantwortet wird. Es folgt ein Establishment Confirm ECF[IPEID_{IWU}] der Netzübergangseinheit IWU an die IP-basierte Funknetzsteuerung RNC-IP. Damit ist die Kommunikation von der IP-basierten Funknetzsteuerung RNC-IP zur ATM-basierten Funknetzsteuerung RNC-IP und umgekehrt eingerichtet. Es werden Nutzdaten übertragen, die als schwarze Pfeile dargestellt sind. Die Nutzdaten werden zwischen der IP-basierten Funknetzsteuerung RNC-IP und der Netzübergangseinheit IWU mittels einer IP/UDP-Kommunikation übertragen. Zwischen der Netzübergangseinheit IWU und der ATM-basierten Funknetzsteuerung RNC-ATM werden die Nutzdaten über eine ATM-basierte AAL2-Verbindung übertragen.

Am Ende der Datenübertragung wird die Funkverbindung wieder abgebaut. Dazu wird zwischen der IP-basierten Funknetzsteuerung RNC-IP und der ATM-basierten Funknetzsteuerung RNC-ATM ein RL Release Request transparent für die Netzübergangseinheit IWU ausgetauscht. Es folgt die Beendigung der Kommunikation zwischen der IP-basierten Funknetzsteuerung RNC-IP und der Netzübergangseinheit IWU, sowie der Abbau der Verbindung zwischen der Netzübergangseinheit IWU und der ATM-basierten Funknetzsteuerung RNC-ATM.

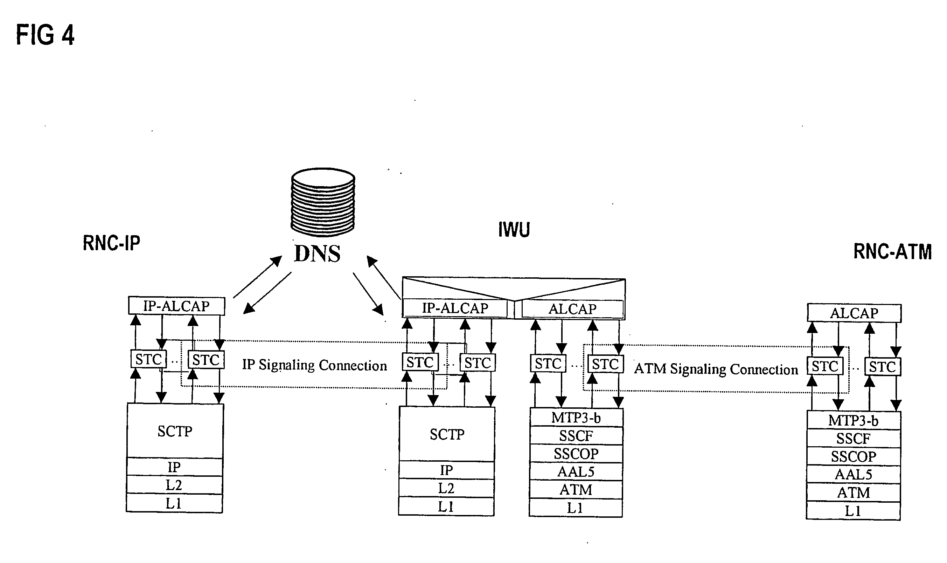

In Figur 4 sind die dabei verwendeten Protokolle dargestellt. Basis für den Verbingungsaufbau ist für die ATM-basierte Funknetzsteuerung das unter der Bezeichnung ALCAP von ITUT unter der Bezeichnung Q.2630.x standardisierte Protokoll zum Aufbau von ATM-basierten Verbindungen mit E.164-Adressen, die das ALCAP von der höheren Schicht (RNL, Radio Network Layer) erhält. Der Verbindungsaufbau für die Netzübergangseinheit IWU und die IP-basierte Funknetzsteuerung RNC-IP erfolgt auf der Basis des ALCAP, das um eine IP-Endpunktkennung erweitert ist. Während der Initialisierung jedes Knotens werden Signalisierungsverbindungen zu der Netzübergangseinheit IWU aufgebaut.

In der darunter liegenden Schicht sind Signalling Transfer Converter STC vorgesehen, die jeweils genau eine Signalisierungsverbindung zu einem korrespondierenden Knoten darstellen. In ATM-basierten Knoten ist der Signalling Transfer für Converter STC über Point Code Adressen des darunter liegenden SS7-Signalisiernetzes an das ALCAP gebunden. In jeder Funknetzsteuerung ist eine Zuordnungstabelle abgelegt, die die E.164-Adresse einer Funknetzsteuerung dem Point Code des Knotens zuordnet, an die die AAL-2-Nachrichten zu schicken sind. Das ALCAP kann daher über die E.164-Adresse direkt den entsprechenden Signalling Transfer Converter und damit die Signalisierverbindung auswählen. In IP-basierten Knoten ist der Signalling Transfer Converter STC über eine IP-Adresse an das ALCAP gebunden. Die Umsetzung der E.164-Adresse in eine IP-Adresse wird durch Abfrage an den Datenbankserver DNS innerhalb des ALCAP vorgenommen.

In dem beschriebenen Verfahren müssen in den IP-basierten Knoten die Signalling Transfer Converter STC für alle potentiell zu erreichenden Knoten im ATM-basierten Netzwerkteil konfiguriert werden. Da alle Verbindungen über die Netzübergangseinheit IWU realisiert werden, müssen in den IP-basierten Knoten soviele STC-Bindungen konfiguriert werden, wie Netzübergangseinheiten IWU vorgesehen sind. Änderungen im ATM-basierten Netzwerkteil werden durch Anpassung der Datenbank im Datenbankserver DNS vorgenommen.

## Patentansprüche

1. Funkkommunikationssystem mit
- wenigstens einem ersten Netzwerkelement, das verbindungsorientierte Kommunikation unterstützt und dem eine erste Adresse in einem ersten Format zugewiesen ist,
- einem zweiten Netzwerkelement, das verbindungslose Kommunikation unterstützt, und dem eine zweite Adresse in einem zweiten Format zugewiesen ist,
- wenigstens einer Netzübergangseinheit
- einer Datenbank,
wobei zum Einrichten einer Kommunikation zwischen dem ersten Netzwerkelement und dem zweiten Netzwerkelement eine Verbindung zwischen dem ersten Netzwerkelement und der Netzübergangseinheit aufgebaut und eine verbindungslose Kommunikation zwischen der Netzübergangseinheit und dem zweiten Netzwerkelement eingerichtet wird und
wobei eine Umsetzung von Adressen vom ersten Format in das zweite Format und umgekehrt mit Hilfe der Datenbank erfolgt, in der ebenfalls gespeichert ist, welche Netzübergangseinheit für welches der ersten Netzwerkelemente zuständig ist.

2. Funkkommunikationssystem nach Anspruch 1,
bei dem mindestens ein Server vorgesehen ist, in dem die Datenbank gespeichert ist.

3. Funkkommunikationssystem nach Anspruch 1 oder 2,
bei dem die Datenbank im Sinne einer verteilten Datenbank an mehreren Speicherorten gespeichert ist.

4. Funkkommunikationssystem nach einem der Ansprüche 1 bis 3,
- bei dem zum Einrichten der Kommunikation zwischen dem ersten Netzwerkelement und dem zweiten Netzwerkelement von dem ersten Netzwerkelement an das zweite Netzwerkelement eine Funkverbindungsanfrage über einen Signalisierungskanal geschickt wird,
- bei dem das zweite Netzwerkelement über eine Anfrage an die Datenbank ihre Adresse im ersten Format ermittelt und als Antwort an das erste Netzwerkelement sendet,
- bei dem die Verbindung zwischen dem ersten Netzwerkelement und der Netzübergangseinheit aufgebaut wird, wobei der Netzübergangseinheit die Adresse des zweiten Netzwerkelementes im ersten Format mitgeteilt wird,
- bei dem die Netzübergangseinheit über eine Anfrage an die Datenbank die Adresse des zweiten Netzwerkelementes im zweiten Format ermittelt,
- bei dem die verbindungslose Kommunikation zwischen der Netzübergangseinheit und dem zweiten Netzwerkelement eingerichtet wird.

5. Funkkommunikationssystem nach einem der Ansprüche 1 bis 3,
- bei dem zum Einrichten der Kommunikation zwischen dem ersten Netzwerkelement und dem zweiten Netzwerkelement von dem zweiten Netzwerkelement an das erste Netzwerkelement eine Funkverbindungsanfrage über einen Signalisierungskanal geschickt wird,
- bei dem das erste Netzwerkelement als Antwort seine Adresse im ersten Format an das zweite Netzwerkelement sendet,
- bei dem das zweite Netzwerkelement über eine Anfrage an die Datenbank die Adresse der Netzübergangseinheit im zweiten Format ermittelt, die eine Verbindung mit dem ersten Netzwerkelement aufbauen kann,
- bei dem die verbindungslose Kommunikation zwischen dem zweiten Netzwerkelement und der Netzübergangseinheit eingerichtet wird,
- bei dem die Verbindung zwischen der Netzübergangseinheit und dem ersten Netzwerkelement aufgebaut wird.

6. Funkkommunikationssystem nach einem der Ansprüche 1 bis 5, bei dem das erste Netzwerkelement ATM-Verbindungen unterstützt,
bei dem das zweite Netzwerkelement IP-Kommunikation unterstützt.

7. Funkkommunikationssystem nach Anspruch 6,
- bei dem dem ersten Netzwerkelement eine A2EA-Adresse zugewiesen wird,
- bei dem dem zweiten Netzwerkelement eine IP-Adresse zugewiesen wird,
- bei dem die Datenbank Umsetzungstabellen von A2EA-Adressen in IP-Adressen und umgekehrt umfasst.

8. Funkkommunikationssystem nach Anspruch 7,
bei dem dem zweiten Netzwerkelement zusätzlich ein Knoten- oder Domain-Name zugewiesen wird, der die zugehörige A2EA-Adresse enthält.

9. Verfahren zum Betrieb eines Funkkommunikationssystems mit wenigstens einer Netzübergangseinheit,
- bei dem eine Verbindung zwischen wenigstens einem ersten Netzwerkelement, das verbindungsorientierte Kommunikation unterstützt und dem eine Adresse in einem ersten Format zugewiesen ist, und einem zweiten Netzwerkelement, das verbindungslose Kommunikation unterstützt und dem eine Adresse in einem zweiten Format zugewiesen ist, **dadurch** aufgebaut wird, dass eine Verbindung zwischen dem ersten Netzwerkelement und der Netzübergangseinheit aufgebaut und eine verbindungslose Kommunikationzwischen der Netzübergangseinheit und dem zweiten Netzwerkelement eingerichtet wird, wobei eine Umsetzung von Adressen vom ersten Format in das zweite Format mit Hilfe einer Datenbank erfolgt, in der ebenfalls gespeichert ist, welche Netzübergangseinheit für welches der ersten Netzwerkelemente zuständig ist.

10. Verfahren nach Anspruch 9,
bei dem die Datenbank auf einem Server gespeichert ist.

11. Verfahren nach Anspruch 9 oder 10,
bei dem die Datenbank im Sinne einer verteilten Datenbank an mehreren Speicherorten gespeichert ist.

12. Verfahren nach einem der Ansprüche 9 bis 11,
- bei dem zum Einrichten der Kommuniaktion zwischen dem ersten Netzwerkelement und dem zweiten Netzwerkelement von dem ersten Netzwerkelement an das zweite Netzwerkelement eine Funkverbindungsanfrage über einen Signalisierungskanal geschickt wird,
- bei dem das zweite Netzwerkelement über eine Anfrage an die Datenbank ihre Adresse im ersten Format ermittelt und als Antwort an das erste Netzwerkelement sendet,
- bei dem die Verbindung zwischen dem ersten Netzwerkelement und der Netzübergangseinheit aufgebaut wird, wobei der Netzübergangseinheit die Adresse des zweiten Netzwerkelementes im ersten Format mitgeteilt wird,
- bei dem die Netzübergangseinheit über eine Anfrage an die Datenbank die Adresse des zweiten Netzwerkelementes im zweiten Format ermittelt,
- bei dem die verbindungslose Kommunikation zwischen der Netzübergangseinheit und dem zweiten Netzwerkelement aufgebaut wird.

13. Verfahren nach einem der Ansprüche 9 bis 12,
- bei dem zum Einrichten der Kommunikation zwischen dem ersten Netzwerkelement und dem zweiten Netzwerkelement von dem zweiten Netzwerkelement an das erste Netzwerkelement eine Funkverbindungsanfrage über einen Signalisierungskanal geschickt wird,
- bei dem das erste Netzwerkelement als Antwort seine Adresse im ersten Format an das zweite Netzwerkelement sendet,
- bei dem das zweite Netzwerkelement über eine Anfrage an die Datenbank die Adresse der Netzübergangseinheit im zweiten Format ermittelt, die eine Verbindung mit dem ersten Netzwerkelement aufbauen kann,
- bei dem die verbindungslose Kommunikation zwischen dem zweiten Netzwerkelement und der Netzübergangseinheit eingerichtet wird,
- bei dem die Verbindung zwischen der Netzübergangseinheit und dem ersten Netzwerkelement aufgebaut wird.

14. Verfahren nach einem der Ansprüche 9 bis 13,
- bei dem das erste Netzwerkelement ATM-Verbindungen unterstützt,
- bei dem das zweite Netzwerkelement IP-Kommunikation unterstützt.

15. Verfahren nach Anspruch 14,
- bei dem dem ersten Netzwerkelement eine A2EA-Adresse zugewiesen wird,
- bei dem dem zweiten Netzwerkelement eine IP-Adresse zugewiesen wird,
- bei dem die Datenbankumsetzungstabellen von A2EA-Adressen in IP-Adressen und umgekehrt umfasst.

16. Verfahren nach Anspruch 15,
bei dem dem zweiten Netzwerkelement zusätzlich ein Knoten- oder Domain-Name zugewiesen wird, der die zugehörige A2EA-Adresse enthält.

## Claims

1. Radio communication system with
- at least one first network element which supports connection-oriented communication and to which a first address in a first format is allocated,
- a second network element which supports connectionless communication and to which a second address in a second format is allocated,
- at least one interworking unit
- a database,
where, to establish communication between the first network element and the second network element, a connection between the first network element and the interworking unit is established and connectionless communication between the interworking unit and the second network element is established, and
where a conversion of addresses from the first format into the second format and vice versa is undertaken with the aid of a database which also stores information about which interworking unit is responsible for which of the first network elements.

2. Radio communication system in accordance with claim 1,
in which at least one server is provided in which the database is stored.

3. Radio communication system in accordance with claim 1 or 2,
in which the database is stored in the sense of a distributed database at a number of storage locations.

4. Radio communication system in accordance with one of the claims 1 to 3,
- in which, to establish communication between the first network element and the second network element, a radio connection query is sent over a signalling channel from the first network element to the second network element,
- in which the second network element determines its address in the first format using a query to the database and sends it as a response to the first network element,
- in which the connection between the first network element and the interworking unit is established, where the interworking unit is notified of the address of the second network element in the first format,
- in which the interworking unit uses a query to the database to determine the address of the second network element in the second format,
- in which the connectionless communication is established between the interworking unit and the second network element.

5. Radio communication system in accordance with one of the claims 1 to 3,
- in which, to establish the communication between the first network element and the second network element, the second network element sends a radio connection query over a signalling channel to the first network element,
- in which the first network element sends as a response its address in the first format to the second network element,
- in which the second network element uses a query to the database to determine the address of the interworking unit in the second format which can establish a connection with the first network element,
- in which connectionless communication is established between the second network element and the interworking unit.
- in which the connection between the interworking unit and the first network element is established.

6. Radio communication system in accordance with one of the claims 1 to 5,
in which the first network element supports ATM connections,
in which the second network element supports IP communication.

7. Radio communication system in accordance with claim 6,
- in which the first network element is allocated an A2EA address,
- in which the second network element is allocated an IP address,
- in which the database includes conversion tables for converting A2EA addresses into IP addresses and vice versa.

8. Radio communication system in accordance with claim 7,
in which the second network element is additionally allocated a node or domain name which contains the associated A2EA address.

9. Method for operating a radio communication system,
- in which a connection is established between at least one first network element which supports connection-oriented communication and to which an address is allocated in a first format, and a second network element which supports connectionless communication and to which an address is allocated in a second format by a connection being established between the first network element and an interworking unit and connectionless communication being created between the interworking unit and the second network element, where a conversion of addresses from the first format into the second format is undertaken with the aid of a database which also stores information about which interworking unit is responsible for which of the first network elements.

10. Method in accordance with claim 9,
in which the database is stored on a server.

11. Method in accordance with claim 9 or 10,
in which the database is stored in the sense of a distributed database at a number of storage locations.

12. Method in accordance with one of the claims 9 to 11,
- in which, to establish communication between the first network element and the second network element, a radio connection query is sent over a signalling channel from the first network element to the second network element
- in which the second network element determines its address in the first format using a query to the database and sends it as a response to the first network element,
- in which the connection between the first network element and the interworking unit is established, where the interworking unit is notified of the address of the second network element in the first format,
- in which the interworking unit uses a query to the database to determine the address of the second network element in the second format,
- in which connectionless communication between the interworking unit and the second network element is established.

13. Method in accordance with one of the claims 9 to 12,
- in which to establish the communication between the first network element and the second network element, the second network element sends a radio connection query over a signalling channel to the first network element,
- in which the first network element sends as a response its address in the first format to the second network element,
- in which the second network element uses a query to the database to determine the address of the interworking unit in the second format which can establish a connection with the first network element,
- in which the connectionless communication is established between the second network element and the interworking unit.
- in which the connection between the interworking unit and the first network element is established.

14. Method in accordance with one of the claims 9 to 13,
- in which the first network element supports ATM connections,
- in which the second network element supports IP communication

15. Method in accordance with claim 14,
- in which the first network element is allocated an A2EA address,
- in which the second network element is allocated an IP address,
- in which database conversion tables includes conversion from A2EA addresses into IP addresses and vice versa.

16. Method in accordance with claim 15,
in which the second network element is additionally allocated a node or domain name which contains the associated A2EA address.

## Revendications

1. Système de radiocommunication comprenant
- au moins un premier élément de réseau supportant une communication en mode connexion et auquel est attribuée une première adresse dans un premier format,
- un second élément de réseau supportant une communication en mode sans connexion et auquel est attribuée une seconde adresse dans un second format,
- au moins une unité d'interface de réseau,
- une base de données,
une connexion étant établie entre le premier élément de réseau et l'unité d'interface de réseau et une communication en mode sans connexion étant établie entre l'unité d'interface de réseau et le second élément de réseau pour établir une communication entre le premier élément de réseau et le second élément de réseau et
une conversion d'adresses du premier format dans le second format, et inversement, étant réalisée à l'aide de la base de données dans laquelle est mémorisée également quelle unité d'interface de réseau est compétente pour lequel des premiers éléments de réseau.

2. Système de radiocommunication selon la revendication 1,
dans lequel on prévoit au moins un serveur dans lequel la base de données est enregistrée.

3. Système de radiocommunication selon la revendication 1 ou 2,
dans lequel la base de données est enregistrée à plusieurs emplacements de mémoire dans l'esprit d'une base de données partagée.

4. Système de radiocommunication selon l'une des revendications 1 à 3,
- dans lequel, pour établir la communication entre le premier élément de réseau et le second élément de réseau, le premier élément de réseau envoie une demande de liaison radio au second élément de réseau par le biais d'un canal de signalisation,
- dans lequel le second élément de réseau détermine son adresse dans le premier format par le biais d'une demande adressée à la base de données et l'envoie en tant que réponse au premier élément de réseau,
- dans lequel la connexion est établie entre le premier élément de réseau et l'unité d'interface de réseau, l'adresse du second élément de réseau dans le premier format étant communiquée à l'unité d'interface de réseau,
- dans lequel l'unité d'interface de réseau détermine l'adresse du second élément de réseau dans le second format par le biais d'une demande adressée à la base de données,
- dans lequel la communication en mode sans connexion est établie entre l'unité d'interface de réseau et le second élément de réseau.

5. Système de radiocommunication selon l'une des revendications 1 à 3,
- dans lequel, pour établir la communication entre le premier élément de réseau et le second élément de réseau, le second élément de réseau envoie une demande de liaison radio au premier élément de réseau par le biais d'un canal de signalisation,
- dans lequel le premier élément de réseau envoie son adresse dans le premier format en tant que réponse au second élément de réseau,
- dans lequel le second élément de réseau détermine, par le biais d'une demande adressée à la base de données, l'adresse dans le second format de l'unité d'interface de réseau capable d'établir une connexion avec le premier élément de réseau,
- dans lequel la communication en mode sans connexion est établie entre le second élément de réseau et l'unité d'interface de réseau,
- dans lequel la connexion est établie entre l'unité d'interface de réseau et le premier élément de réseau.

6. Système de radiocommunication selon l'une des revendications 1 à 5,
dans lequel le premier élément de réseau supporte des connexions ATM,
dans lequel le second élément de réseau supporte une communication IP.

7. Système de radiocommunication selon la revendication 6,
- dans lequel une adresse A2EA est attribuée au premier élément de réseau,
- dans lequel une adresse IP est attribuée au second élément de réseau,
- dans lequel la base de données comprend des tables de conversion d'adresses A2EA en adresses IP et réciproquement.

8. Système de radiocommunication selon la revendication 7,
dans lequel on attribue en plus au second élément de réseau un nom de noeud ou de domaine qui contient l'adresse A2EA correspondante.

9. Procédé pour faire fonctionner un système de radiocommunication comprenant au moins une unité d'interface de réseau,
- dans lequel on établit une connexion entre au moins un premier élément de réseau supportant une communication en mode connexion et auquel est attribuée une adresse dans un premier format et un second élément de réseau supportant une communication en mode sans connexion et auquel est attribuée une adresse dans un second format en établissant une connexion entre le premier élément de réseau et l'unité d'interface de réseau et en établissant une communication en mode sans connexion entre l'unité d'interface de réseau et le second élément de réseau, une conversion d'adresses du premier format dans le second format étant réalisée à l'aide d'une base de données dans laquelle est mémorisée également quelle unité d'interface de réseau est compétente pour lequel des premiers éléments de réseau.

10. Procédé selon la revendication 9,
dans lequel la base de données est enregistrée sur un serveur.

11. Procédé selon la revendication 9 ou 10,
dans lequel la base de données est enregistrée au niveau de plusieurs emplacements de mémoire dans l'esprit d'une base de données partagée.

12. Procédé selon l'une des revendications 9 à 11,
- dans lequel, pour établir la communication entre le premier élément de réseau et le second élément de réseau, le premier élément de réseau envoie une demande de liaison radio au second élément de réseau par le biais d'un canal de signalisation,
- dans lequel le second élément de réseau détermine son adresse dans le premier format par le biais d'une demande adressée à la base de données et l'envoie en tant que réponse au premier élément de réseau,
- dans lequel la connexion est établie entre le premier élément de réseau et l'unité d'interface de réseau, l'adresse du second élément de réseau dans le premier format étant communiquée à l'unité d'interface de réseau,
- dans lequel l'unité d'interface de réseau détermine l'adresse du second élément de réseau dans le second format par le biais d'une demande adressée à la base de données,
- dans lequel la communication en mode sans connexion est établie entre l'unité d'interface de réseau et le second élément de réseau.

13. Procédé selon l'une des revendications 9 à 12,
- dans lequel, pour établir la communication entre le premier élément de réseau et le second élément de réseau, le second élément de réseau envoie une demande de liaison radio au premier élément de réseau par le biais d'un canal de signalisation,
- dans lequel le premier élément de réseau envoie son adresse dans le premier format en tant que réponse au second élément de réseau,
- dans lequel le second élément de réseau détermine, par le biais d'une demande adressée à la base de données, l'adresse dans le second format de l'unité d'interface de réseau capable d'établir une connexion avec le premier élément de réseau,
- dans lequel la communication en mode sans connexion est établie entre le second élément de réseau et l'unité d'interface de réseau,
- dans lequel la connexion est établie entre l'unité d'interface de réseau et le premier élément de réseau.

14. Procédé selon l'une des revendications 9 à 13,
- dans lequel le premier élément de réseau supporte des connexions ATM,
- dans lequel le second élément de réseau supporte une communication IP.

15. Procédé selon la revendication 14,
- dans lequel une adresse A2EA est attribuée au premier élément de réseau,
- dans lequel une adresse IP est attribuée au second élément de réseau,
- dans lequel la base de données comprend des tables de conversion d'adresses A2EA en adresses IP et réciproquement.

16. Procédé selon la revendication 15,
dans lequel on attribue en plus au second élément de réseau un nom de noeud ou de domaine qui contient l'adresse A2EA correspondante.
